# EUROPÄISCHE PATENTSCHRIFT

(11) **EP 2 503 195 B1**
(45) Veröffentlichungstag und Bekanntmachung des Hinweises auf die Patenterteilung: **23.08.2017**
(21) Anmeldenummer: 11194202.5
(22) Anmeldetag: 19.12.2011
(51) Int. Cl.: F16H 61/4026, F16H 61/4139

(54) **Speisedruckbegrenzungsventil für ein hydrostatisches Getriebe**
Scavenging pressure limiting valve in an hydrostatic transmission
Limitation de la pression de gavage pour une transmission hydrostatique

(30) Priorität: 25.03.2011 DE 102011015235; 30.09.2011 DE 102011114628
(43) Veröffentlichungstag der Anmeldung: 26.09.2012
(73) Patentinhaber: CLAAS Industrietechnik GmbH, 33106 Paderborn (DE)
(72) Erfinder: Gohde, Thomas, 33181 Bad Wünnenberg (DE); Ratzke, Michael, 33332 Gütersloh (DE); Verhorst, Jan-Willem, 59555 Lippstadt (DE)
(74) Vertreter: Budach, Steffen

(56) Entgegenhaltungen:
- DE-A1- 19 727 360
- DE-A1-102008 060 066
- US-A1- 2007 062 186
- US-H1- H1 977

## Beschreibung

Die vorliegende Erfindung betrifft ein Getriebeaggregat, insbesondere zur Verwendung im Antriebsstrang eines landwirtschaftlichen Fahrzeugs, wie etwa eines Traktors.

Ein solches Getriebeaggregat umfasst herkömmlicherweise ein mechanisches Verzweigungsgetriebe, wie etwa ein Planetengetriebe, und ein hydrostatisches Getriebe mit zwei hydrostatischen Einheiten, die in einem Fluidkreislauf miteinander verbunden sind und von denen jeweils eine als Pumpe und die andere als Motor arbeitet. Indem z.B. bei wenigstens einer dieser beiden hydrostatischen Einheiten durch Schwenken eines Zylinderblocks gegen eine Drehscheibe, an der die Kolben des Zylinderblocks angreifen, das Schluckvolumen der Einheit variiert wird, ist eine stufenlose Verstellung der Übersetzung des hydrostatischen Getriebes realisierbar, und indem das hydrostatische Getriebe mit einem Ausgleichsanschluss des Verzweigungsgetriebes drehverbunden ist, beeinflusst es die Drehzahl einer Ausgangswelle des Verzweigungsgetriebes proportional zu seinem eigenen Übersetzungsverhältnis.

Die hydrostatischen Einheiten verlieren im Laufe des Betriebs kontinuierlich Druckfluid, das in einem das hydrostatische Getriebe umgebenden Gehäuse aufgefangen wird und in den Druckfluidkreislauf zurückgespeist werden muss. Das in dem Druckfluidkreislauf zirkulierende Druckfluid erwärmt sich stark im Betrieb, und um eine Überhitzung zu vermeiden, ist es gebräuchlich, kontinuierlich Druckfluid aus dem Kreislauf auszuspeisen, um es zu kühlen, und kühles Druckfluid in den Kreislauf zurückzuspeisen. Ein Getriebeaggregat mit den Merkmalen des Oberbegriffs des Anspruchs 1 ist aus der DE 197 27 360 A1 bekannt.

Beide Aufgaben, der Ausgleich der Fluidverluste und der kontinuierliche Austausch, werden üblicherweise von einer Speisepumpe wahrgenommen. Herkömmlicherweise ist diese Speisepumpe dimensioniert, um den Druckfluidbedarf in allen unter normalen Betriebsbedingungen möglichen Belastungssituationen decken zu können. Hierfür muss sie einen geeigneten Volumenstrom bei hohem Ausgangsdruck bereitstellen, der vom hydrostatischen Getriebe, wenn dieses nicht unter maximaler Last arbeitet, nicht vollständig aufgenommen werden kann. Herkömmlicherweise ist daher ein Druckbegrenzungsventil parallel zum Druckfluidkreislauf zwischen einen Auslassanschluss der Speisepumpe und ein Fluidreservoir geschaltet, so dass derjenige Teil des von der Speisepumpe geförderten Druckfluids, der von dem hydrostatischen Getriebe nicht abgenommen wird, über das Druckbegrenzungsventil zurück zum Fluidreservoir fließen kann. Über dieses Druckbegrenzungsventil geht eine beträchtliche Leistung ungenutzt verloren.

Aufgabe der Erfindung ist, die Energieeffizienz eines Getriebeaggregats mit hydrostatischem Getriebe zu verbessern.

Die Aufgabe wird durch ein Getriebeaggregat mit den Merkmalen des Anspruchs 1 gelöst. So kann in Zeigten, in denen das hydrostatische Getriebes wenig Druckfluid von der Speisepumpe benötigt, der Grenzdruck auf den Wert herabgesetzt werden der erforderlich ist, damit die benötigte Menge an Druckfluid noch sicher in das hydrostatische Getriebe eintritt. Die Absenkung des Drucks am Auslassanschluss der Speisepumpe reduziert die zum Bereitstellen des Fluidstroms erforderliche Antriebsleistung und ermöglicht so einen energieeffizienten Betrieb.

Eine Drosselung des Leistungsbedarfs der Speisepumpe durch Herabsetzen des Drucks am Auslassanschluss ist insbesondere bei einem Getriebeaggregat sinnvoll, bei dem ein gemeinsamer Primärmotor mit der Speisepumpe und einer der hydrostatischen Einheiten, die als Pumpe arbeitet, nicht mechanisch verbunden ist, so dass die Fördermenge der Speisepumpe nicht zu Drehzahlen von Teilen des Getriebeaggregats in einer bauartbedingt vorgegebenen Beziehung steht.

Das verstellbare Begrenzungsventil ist vorzugsweise als Proportionalventil ausgearbeitet.

Ein Regelkreis ist erfindungsgemäß mit dem Druckbegrenzungsventil und mit einem Temperatursensor verbunden, um den Druck am Ausgang der Speisepumpe anhand einer Betriebstemperatur des hydrostatischen Getriebes zu steuern. So kann die Menge an Druckfluid, die in das hydrostatische Getriebe eingespeist wird, im Falle einer hohen Temperatur, wenn eine verstärkte Kühlung des Druckfluids erforderlich ist, heraufgesetzt und bei niedriger Temperatur reduziert werden.

Dieser Temperatursensor ist zweckmäßigerweise an einer von dem hydrostatischen Getriebe zum Druckfluidreservoir führenden Ablaufleitung angeordnet.

Alternativ oder ergänzend kann der Regelkreis auch eingerichtet sein, den Druck am Ausgang der Speisepumpe anhand des Durchsatzes der hydrostatischen Einheiten und/oder wenigstens eines in dem Druckfluidkreislauf gemessenen Drucks zu steuern. Der Durchsatz und die Differenz zwischen den Drücken im Hoch- und Niederdruckzweig des Druckfluidkreislaufs sind proportional zur in dem hydrostatischen Getriebe umgesetzten Leistung und infolgedessen auch proportional zur Erwärmung des Druckfluids in dem hydrostatischen Getriebe. Eine Regelung des Ausgangsdrucks der Speisepumpe anhand des Durchsatzes der hydrostatischen Einheiten und/oder der Druckdifferenz oder des Drucks im Hochdruckzweig ermöglicht eine Anpassung der Einspeisemenge, die zeitlich sehr eng an die momentane Leistung des hydrostatischen Getriebes gekoppelt ist und einer Erwärmung des Druckfluids entgegenwirken kann, noch bevor diese messbar wird.

Das von der Speisepumpe geförderte Druckfluid kann auch genutzt werden, um wenigstens eine Kupplung des Getriebeaggregats hydraulisch zu betätigen.

Wenn das Getriebeaggregat ein mechanisches Verzweigungsgetriebe umfasst, können die Kupplungen zum Umschalten zwischen verschiedenen Fahrbereiche des Verzweigungsgetriebes dienen, d.h. mittels der Kupplungen ist die Art und Weise, wie das hydrostatische Getriebe an das Verzweigungsgetriebe angeschlossen ist, variierbar. In Zeiten, in denen das hydrostatische Getriebe unbelastet oder zumindest wenig belastet ist und und auch die Last dementsprechend auf den Kupplungen gering ist, kann der Druck am Ausgang der Speisepumpe durch das Druckbegrenzungsventil niedrig gehalten werden. Damit werden die Kupplungen nur einem niedrigen Ansteuerdruck ausgesetzt

Um, z.B. beim Anfahren, besonders hohe Drehmomente übertragen zu können, kann die Möglichkeit vorgesehen werden, das Druckbegrenzungsventil anzusteuern, um den Druck kurzfristig zu steigern.

Dementsprechend können die Abmessungen von die Kupplungen betätigenden Stellgliedern gering gehalten werden, wodurch Gewicht und Kosten gespart werden können.

Das von der Speisepumpe geförderte Druckfluid kann auch genutzt werden, um mit Hilfe wenigstens eines mit dem Druckfluid beaufschlagbaren hydraulischen Stellglieds die Schluckmenge wenigstens einer der hydrostatischen Einheiten zu verstellen.

Eine Druckfluidleitung, die das hydrostatische Getriebe mit der Speisepumpe verbindet, weist zur Schwingungs- und Geräuschentkopplung vorzugsweise zwischen einem getriebeseitigen Leitungsabschnitt und einem pumpenseitigen Leitungsabschnitt wenigstens eine teleskopische und/oder schwenkbare Verbindung auf.

Vorzugsweise umfasst diese Druckfluidleitung einen Ausgleichsabschnitt, der sowohl mit dem getriebeseitigen Leitungsabschnitt als auch dem pumpenseitigen Leitungsabschnitt jeweils über eine teleskopische und/oder schwenkbare Verbindung verbunden ist.

Die teleskopische und/oder schwenkbare Verbindung umfasst vorzugsweise jeweils einen äußeren Rohrabschnitt, einen mit radialem Spiel in den äußeren Rohrabschnitt auf einer gegebenen Länge eingreifenden inneren Rohrabschnitt und eine Dichtung, die das radiale Spiel zwischen den Rohrabschnitten nur auf einem Bruchteil dieser Länge ausfüllt. Eine solche Dichtung erlaubt sowohl eine Verschiebung der Rohrabschnitte relativ zueinander in der Längsrichtung als auch eine Drehung um zur Längrichtung der Rohrabschnitte orthogonale Achsen.

Wenn das hydrostatische Getriebe in einem Gehäuse entnehmbar montiert ist, ist der pumpenseitige Leitungsabschnitt vorzugsweise am Gehäuse fest.

Das Gehäuse kann zweckmäßigerweise gleichzeitig das oben erwähnte Druckfluidreservoir bilden.

Um die Entnahme des hydrostatischen Getriebes aus dem Gehäuse zu ermöglichen, ist das hydrostatische Getriebe in dem Gehäuse vorzugsweise durch Stifte gehalten, die durch eine Wand des Gehäuses hindurch in einen Träger des hydrostatischen Getriebes eingreifen und die, um das hydrostatische Getriebe zu lösen, aus der Wand und dem Träger herausziehbar sind.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines hydromechanischen Getriebes, an dem die vorliegende Erfindung anwendbar ist;
- Fig. 2: eine perspektivische Ansicht des hydromechanischen Getriebes;
- Fig. 3: eine perspektivische Ansicht des hydrostatischen Getriebes
- Fig. 4: eine perspektivische Ansicht des hydrostatischen Getriebes und eines es umgebenden Gehäuses;
- Fig. 5: einen schematischen Schnitt durch das Gehäuse des hydrostatischen Getriebes;
- Fig. 6: einen schematischen Schnitt durch eine erste elastische Verbindung zwischen dem hydrostatischen Getriebe und dem Gehäuse;
- Fig. 7: einen zu Fig. 5 analogen Schnitt durch eine zweite Verbindung des hydrostatischen Getriebes mit dem Gehäuse;
- Fig. 8: ein Hydraulikdiagramm des hydrostatischen Getriebes;
- Fig. 9: eine Durchführung für Hydraulikfluid durch die Wand des Gehäuses; und
- Fig. 10: einen schematischen Längsschnitt durch eine Leitung der Durchführung.

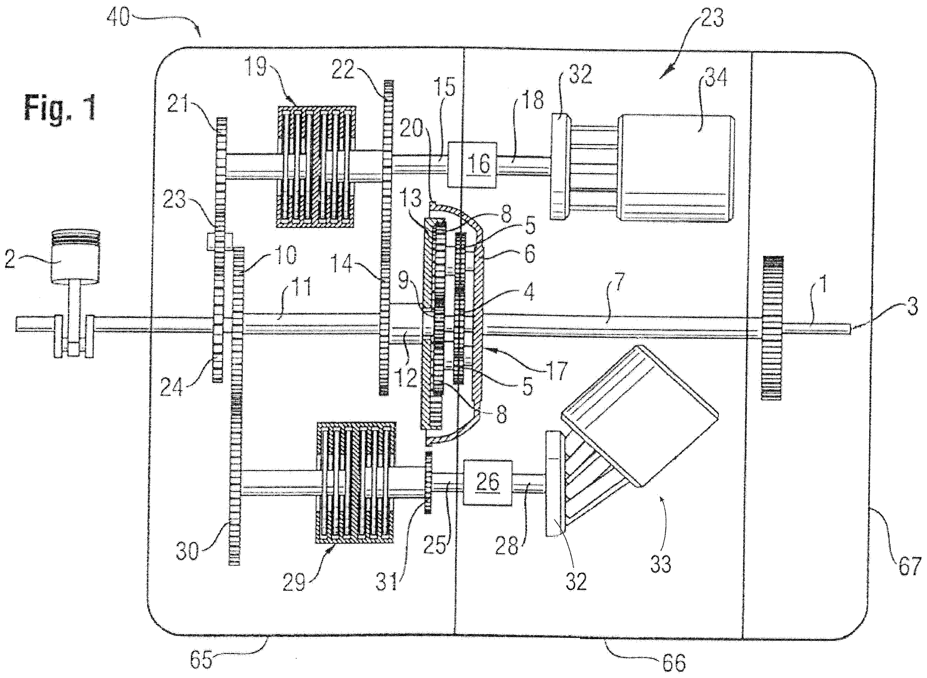

Fig. 1 veranschaulicht in einer schematischen Darstellung Anordnung und Zusammenwirken der beweglichen Teile des erfindungsgemäßen hydromechanischen Getriebes. Eine Antriebswelle 1 des hydromechanischen Getriebes ist mit einem schematisch durch einen an der Antriebswelle 1 angreifenden Kolben angedeuteten Motor 2 verbunden. Die Antriebswelle 1 erstreckt sich längs durch das gesamte Getriebe bis zu einem dem Motor 2 gegenüberliegendem Zapfwellenanschluss 3. Das Verzweigungsgetriebe umfasst im dargestellten Ausführungsbeispiel ein zweistufiges Planetengetriebe 17, von dem ein Sonnenrad 4 in etwa mittig auf der Antriebswelle 1 befestigt ist. Das Sonnenrad 4 kämmt mit Planetenrädern 5, deren Planetenträger 6 fest mit einer Ausgangswelle 7 des Planetengetriebes 17 verbunden ist. Diese Ausgangswelle 7 ist eine zur Antriebswelle 1 koaxiale Hohlwelle. Der Planetenträger 6 trägt gleichzeitig Planetenräder 8 einer zweiten Stufe des Planetengetriebes 17. Jedes der Planetenräder 8 ist mit einem der Planetenräder 5 drehfest verbunden. Die Planetenräder 8 kämmen einerseits mit einem zweiten Sonnenrad 9, das zusammen mit einem Zahnrad 10 drehfest auf einer zweiten um die Antriebswelle 1 drehbaren Hohlwelle 11 sitzt, und andererseits mit einem Hohlrad 13, das über eine die Hohlwelle 11 umgebende weitere Hohlwelle 12 mit einem Zahnrad 14 verbunden ist.

Der Planetenträger 6 umgibt schüsselförmig die Planetenräder 5, 8 und Sonnenräder 4, 9 und das Hohlrad 13 und ist an seinem Außenumfang, in etwa in einer gleichen Ebene mit dem Hohlrad 13, mit einem Zahnkranz 20 versehen.

Eine erste Vorgelegewelle 15 ist von zwei Hohlwellen mit jeweils einem Zahnrad 21, 22 umgeben und weist eine Kupplung 19 zum wahlweise Ankuppeln eines der Zahnräder 21, 22 an die Vorgelegewelle 15 auf. Eine Bogenzahnkupplung 16 verbindet die erste Vorgelegewelle 15 mit einer Welle 18 einer ersten Hydrostateinheit 23. Die Bogenzahnkupplung 16 umfasst in an sich bekannter Weise, wie z.B. in DE-AS 1 208 565, DE-OS 2 355 433 und DE-OS 38 11 790 sowie der GB-A 2 040 397 gezeigt, eine Buchse mit innen liegender Verzahnung und ein bogenverzahntes Ritzel, das winkel- und radial verlagerbar in die Buchse eingreift. Die Bogenzahnkupplung 16 verbindet die Wellen 15, 18 drehmomentschlüssig und erlaubt dabei eine begrenzte Verschiebung der Wellen 15, 18 zueinander in axialer Richtung sowie Schwenkbewegungen der Wellen 15, 18 relativ zueinander um eine zur Längsrichtung der Vorgelegewelle 15 senkrechte Achse.

Das Zahnrad 22 kämmt mit dem an das Sonnenrad 9 gekoppelten Zahnrad 14. Das Zahnrad 21 ist über ein Umkehrrad 27 an ein Zahnrad 24 auf der Antriebswelle 1 gekoppelt.

Analog zur ersten Vorgelegewelle 15 weist auch eine zweite Vorgelegewelle 25 eine Kupplung 29 zum wahlweisen Ankoppeln der Vorgelegewelle 25 an zu ihr koaxiale Zahnräder 30 bzw. 31 auf, und eine Bogenzahnkupplung 26 verbindet die zweite Vorgelegewelle 25 mit einem Wellenabschnitt 28 einer zweiten Hydrostateinheit 33.

Die Hydrostateinheiten 23, 33 sind an sich bekannte Axialkolbeneinheiten mit einer drehfest mit der jeweiligen Welle 18 bzw. 28 verbundenen Drehscheibe 32, an der Kolben eines Zylinderblocks 34 jeweils über Kugelgelenke angreifen. Die Drehung der Drehscheibe 32 verursacht eine oszillierende Bewegung der Kolben, deren Amplitude mit dem Schwenkwinkel des Zylinderblocks 34 relativ zur Welle 18 bzw. 28 zunimmt und das Schluckvolumen der betreffenden Hydrostateinheit 23 bzw. 33 bestimmt. Fig. 1 zeigt die Einheit 23 bei einem minimalen Schwenkwinkel von 0° und die Einheit 33 bei einem maximalen Schwenkwinkel von 45°.

Die Hydrostateinheiten 23, 33 sind untereinander durch zwei in Fig. 1 nicht dargestellte Fluidleitungen im Kreis verbunden, so dass von einer der Einheiten 23, 33 gepumptes Hydraulikfluid die jeweils andere Einheit antreibt. Jede der beiden Einheiten 23, 33 kann sowohl als Pumpe als auch als Motor arbeiten, wobei durch Variieren der Schwenkwinkel der Hydrostateinheiten 23, 33 die Übersetzung des von den zwei Einheiten 23, 33 gebildeten hydrostatischen Getriebes stufenlos veränderbar ist. Die Übersetzung des gesamten hydromechanischen Getriebes hängt von den Schwenkwinkeln der Hydrostateinheiten 13, 33 und von den Stellungen der Kupplungen 19, 29 ab.

Das gesamte hydromechanische Getriebe ist in einem aus mehreren Modulen zusammengesetzten Außengehäuse 40 gekapselt. Die Gehäusemodule, mit 65, 66, 67 bezeichnet, folgen in axialer Richtung der Welle 1 aufeinander. Das erste, zum Motor 2 benachbarte Modul 65 nimmt das Verzweigungsgetriebe, d.h. das Planetengetriebe 17 und die Vorgelegewellen 15, 25 auf, das darauffolgende mittlere Modul 66 das hydrostatische Getriebe mit den Hydrostateinheiten 23, 33, und das dritte Modul 67 eine in der Fig. 1 nicht im Detail dargestellte Getriebestufe und den Zapfwellenanschluss 3.

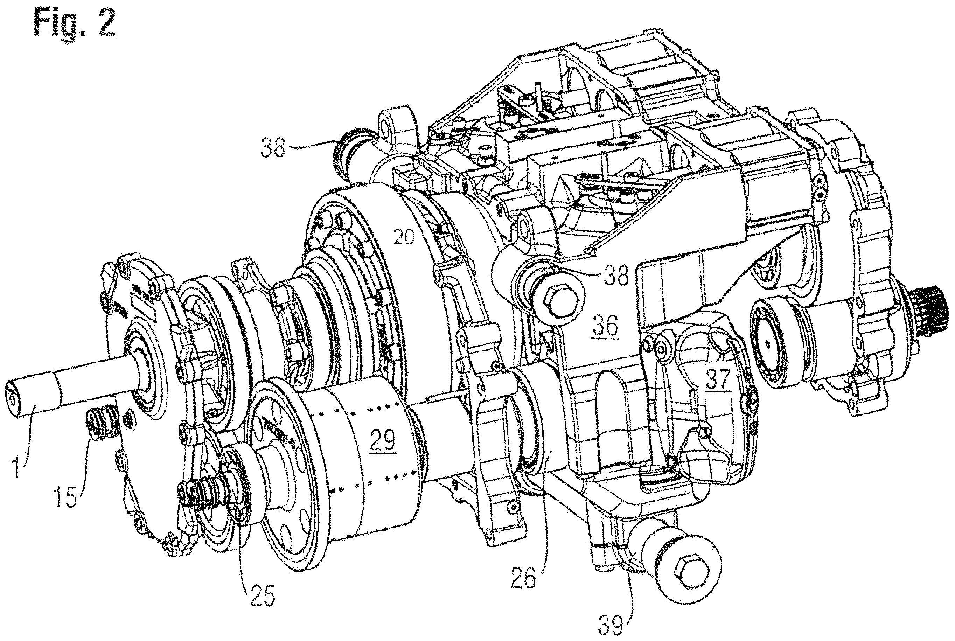

Fig. 2 zeigt eine perspektivische Ansicht des mit Bezug auf Fig. 1 beschriebenen Getriebes. Den rechten Teil der Darstellung der Fig. 2 nimmt das Verzweigungsgetriebe mit den Vorgelegewellen 15, 25 und dem Planetengetriebe 17 ein. Das Verzweigungsgetriebe ist starr in dem Gehäusemodul 65 verbaut.

In einem Trägerrahmen 36 sind (in der Fig. nicht sichtbar) Lager untergebracht, die die Wellen 18, 28 der Hydrostateinheiten 23, 33 halten. An der vom Verzweigungsgetriebe abgewandten Seite des Trägerrahmens 36 sind zwei Gehäuse 37 um vertikal durch die Drehscheiben 32 verlaufende Achsen schwenkbar angelenkt, die jeweils den Zylinderblock 34 einer der beiden Hydrostateinheiten 23, 33 aufnehmen. In Fig. 2 ist nur das Gehäuse 37 der Einheit 33 sichtbar. Die Druckfluidleitungen, die die Hydrostateinheiten 23, 33 miteinander verbinden, verlaufen durch Bohrungen innerhalb des Trägerrahmens 36.

Der Trägerrahmen 36 und das Verzweigungsgetriebe sind unabhängig voneinander im Modul 66 bzw. im Modul 65 des in Fig. 2 nicht gezeigten schallisolierenden Außengehäuses 40 befestigt. Zur Befestigung des Trägerrahmens 36 im Modul 66 dienen horizontal, quer zu den Wellen 1, 15, 25 orientierte und jeweils in Aufnahmen des Trägerrahmens 36 bzw. des Gehäusemoduls 66 eingreifende Stifte 38, 39.

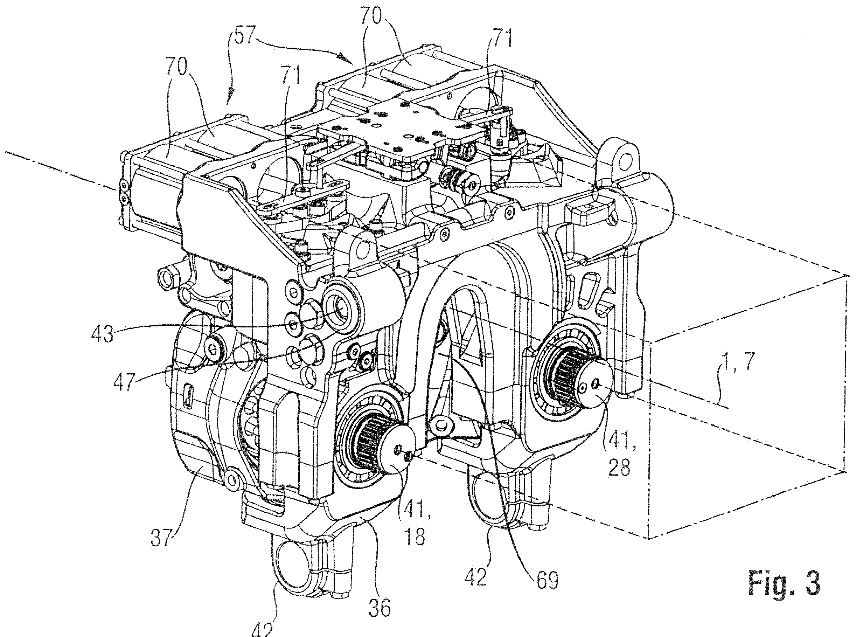

Fig. 3 zeigt eine perspektivische Ansicht des hydrostatischen Getriebes, d.h. des Trägerrahmens 36 und der daran montierten Gehäuse 37, die die hydrostatischen Einheiten 23, 33 enthalten. An der Vorderseite des Trägerrahmens überstehende Spitzen 41 der der Hydrostatwellen 18, 28 sind mit einer Außenverzahnung versehen, auf die jeweils ein Ritzel der oben erwähnten Bogenzahnkupplungen 16 bzw. 26 aufgesteckt werden. Die Bogenzahnkupplungen vervollständigende Buchsen mit komplementären Aussparungen zu den in Fig. 3 nicht gezeigten Ritzeln der Bogenzahnkupplungen befinden sich an den Enden der in Fig. 3 nicht gezeigten Vorgelegewellen 15, 25.

Eine nach unten offene Aussparung 69 gibt dem Trägerrahmen 35 in etwa die Form eines umgekehrten U. Sie ist vorgesehen, um die Wellen 1, 7 aufzunehmen, die im zusammengebauten Zustand des Getriebes entlang einer in Fig. 3 mit 1,7 bezeichneten gestrichelten Linie verlaufen werden. Die Wellen 18, 28 der Hydrostateinheiten 23, 33 befinden sich auf verschiedenen Seiten der Aussparung 69 auf einem niedrigeren Niveau als die Linie 1, 7.

In einem oberen Bereich des Trägerrahmens 36 sind zwei hydraulische Stellglieder 57 angeordnet, die die Schwenkwinkel der hydrostatischen Einheiten 23, 33 steuern. Jedes Stellglied 57 umfasst ein Paar von Hydraulikzylindern 70, deren Kolben jeweils an den Enden eines zweiarmigen Hebels 71 angreifen. Der Hebel 71 ist über eine im Inneren des Trägerrahmens 36 verborgene vertikale Stange mit dem Gehäuse 37 der zugeordnete Hydrostateinheit 23 oder 33 verbunden.

Wie in der Fig. 3 angedeutet, bilden die Hydrostatwellen 18, 28 und die Stellglieder 57, gesehen entlang der Achse 1, 7, ein Rechteck, in das die Aussparung 69 von unten her eingreift, so dass die sich durch die Aussparung 68 erstreckenden Wellen 1, 7 das Rechteck etwa mittig kreuzen. So bleibt an der Rückseite des Trägerrahmens 36 ein Maximum an Platz für an den Wellen 1, 7 angreifende Getriebekomponenten wie etwa die Getriebeabtriebsstufe und den Zapfwellenanschluss 3 verfügbar.

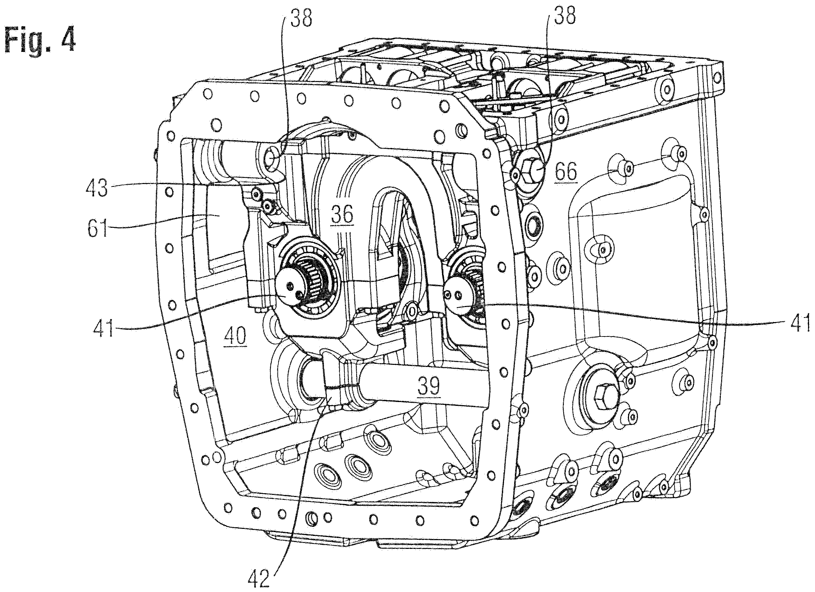

Fig. 4 zeigt in einer perspektivischen Ansicht die Lagerbrücke 36 und das sie umgebende Modul 66 des Außengehäuses 40. Der untere der Stifte, 39, erstreckt sich quer durch das Gehäusemodul 66 und ist in Bohrungen von einander gegenüberliegenden Seitenwänden des Gehäusemoduls 66 gelagert. Von den zwei Schraubschellen 42, die den Trägerrahmen 36 mit dem Stift 39 verbinden, ist eine, unterhalb der hydrostatischen Einheit 33, hinter einer Seitenwand des Gehäusemoduls 66 verborgen. Die Stifte 38 erstrecken sich jeweils nur durch eine Seitenwand des Gehäusemoduls 66 bis in die Bohrungen 43 des Trägerrahmens 36.

Im fertig zusammengebauten Zustand ist die Oberseite des Gehäusemoduls 66 durch einen Deckel dicht verschlossen, der in Fig. 4 nicht dargestellt ist.

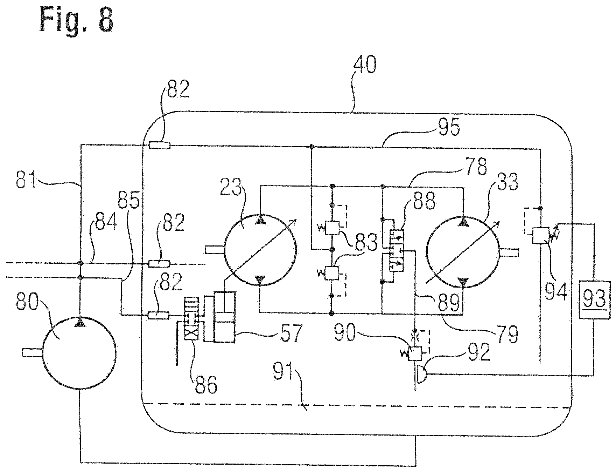

An einer vom Betrachter abgewandten Seitenwand des Gehäuses 40 ist ein Fenster ausgespart. In dem Fenster ist ein Durchführungsrahmen 61 montiert, dessen Funktion später in Verbindung mit Fig. 8 erläutert wird.

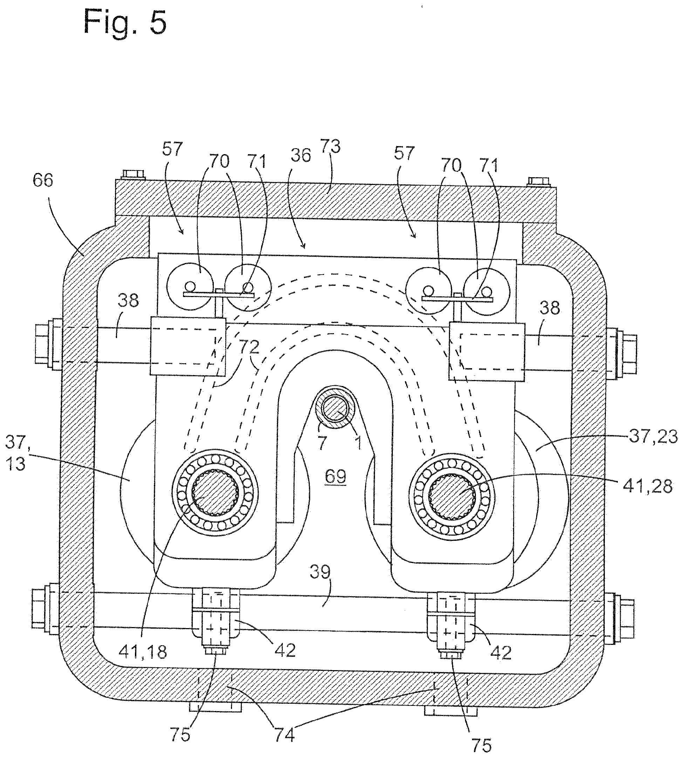

Fig. 5 zeigt einen schematischen Querschnitt durch das Gehäusemodul 66 in zusammengebautem Zustand. Die Wellen 1, 7 erstrecken sich durch die Aussparung 69 des Trägerrahmens 36. Die Hydrostatwellen 18, 28 und sie umgebende Kugellager sind an der Vorderseite des Trägerrahmens 36 zu sehen. Die innerhalb des Trägerrahmens 36 verlaufende Hydraulikfluidleitungen 72 sind als gestrichelte Umrisse dargestellt. Die Gehäuse 37 der Hydrostateinheiten 23, 33, die mit den Hydraulikfluidleitungen 72 verbunden sind, sind zum Teil hinter dem Trägerrahmen 36 sichtbar. Das Gehäuse 37 der Hydrostateinheit 33 ist nach außen geschwenkt.

Um zu Wartungs- und Justagezwecken auf die Stellglieder 57 zuzugreifen, genügt es, den Deckel 73 des Gehäusemoduls 66 zu entfernen. Ein Ausbau des gesamten hydrostatischen Getriebes ist möglich, indem Bohrungen 74 im Boden des Gehäusemoduls 66 geöffnet werden, ggf. im Gehäusemodul 66 anstehendes Hydrauliköl abgelassen wird und durch die Bohrungen 74 hindurch Schrauben 75 der Schraubschellen 42 gelockert werden. Dadurch ist es möglich, den Stift 39 in seitlicher Richtung aus dem Gehäusemodul 66 herauszuziehen. Wenn auch die Stifte 38 entfernt sind, genügt es, das hydrostatische Getriebe geringfügig in Richtung der Wellen 1 bzw. 7 zu bewegen, um die Bogenzahnkupplungen 16, 26 zu zerlegen, dann kann das hydrostatische Getriebe aus dem Gehäusemodul 66 nach oben herausgehoben werden, während das Verzweigungsgetriebe an seinem Einbauort verbleiben kann.

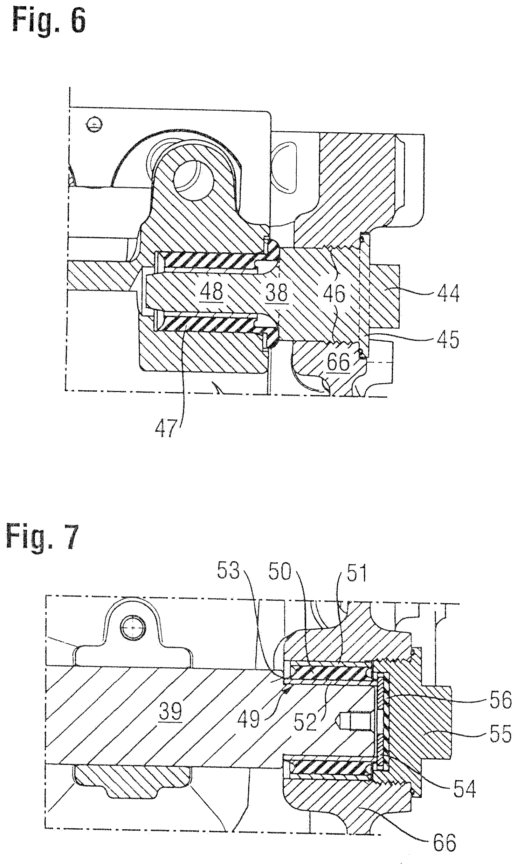

Fig. 6 zeigt einen Schnitt durch einen der sich jeweils nur durch eine Seitenwand des Gehäusemoduls 66 erstreckenden Stifte 38. Der Stift 38 umfasst von außen nach innen einen Schraubsechskant 44, einen mit einem Dichtring versehenen, an Gehäuse 40 anliegenden Flansch 45, einen Gewindeabschnitt 46, der den Stift 38 in der Wand des Gehäuses 40 fixiert, einen Abschnitt mit Welienpassung, der eine genaue Positionierung des Stiftes 38 im Gehäuse 40 erlaubt, sowie einen in die Bohrung 43 des Trägerrahmens 36 eingreifenden, von einer Elastomerhülse 47 umgebenen Abschnitt 48. Während der Stift 38 starr mit dem Gehäuse 40 verbunden ist, erlaubt die Elastomerhülse 47 Bewegungen des Trägerrahmens 36 relativ zum Stift 38 und folglich auch relativ zum Gehäuse 40.

Fig. 7 zeigt einen Schnitt durch den unteren, sich durch beide Seitenwände des Gehäusemoduls 66 erstreckenden Stift 39. Die Schellen 42 greifen ohne eine dazwischen liegende Elastomerschicht an dem unteren Stift 39 an. Stattdessen ist auf die geringfügig verjüngten Enden des Stifts 39 jeweils eine sogenannte Ultrabuchse 49 aufgeschoben, die in an sich bekannter Weise jeweils eine Elastomerschicht 50 zwischen starren äußeren und inneren Hülsen 51, 52 aufweist. Zur Fixierung des Stiftes 39 in axialer Richtung wird der Deckel 55 in das Gehäuse 40 eingeschraubt und bringt somit eine axiale Vorspannung auf die Platte 54 auf, die zwischen der Ultrabuchse 49 und dem Deckel 55 geklemmt ist. Die Ultrabuchse 49 wiederum ist am Stift 39 fixiert durch Klemmung ihrer inneren Hülse 52 zwischen einer Schulter 53 des Stifts 39 und der Platte 54. Der Stift 39 greift von innen in den Deckel 55 ein. Die Platte 54 besteht aus einem Elastomer oder aus einem unlösbaren Verbund von einer metallischen Trägerschicht mit einem aufgebrachten Elastomer 56. In einer abgewandelten Ausführung können die Platte 54 und die Elastomerschicht 56 aus zwei verschiedenen Bauteilen bestehen. Die Entkoppelung des Stiftes 39 mittels der Elastomerschichten 50 und 56 erlaubt gedämpfte Schwingbewegungen des Stifts 39 relativ zum Gehäuse 40 in alle Raumrichtungen.

Fig. 8 ist ein Hydraulikdiagramm des anhand der vorhergehenden Figuren erläuterten hydrostatischen Getriebes. Ein Druckfluidkreislauf umfasst die hydrostatischen Einheiten 23, 33 und diese verbindende Druckfluidleitungen 78, 79, wobei von der Drehrichtung der hydrostatischen Einheiten 23, 33 und davon, welche von beiden als Pumpe und welche als Motor arbeitet, abhängt, welche der beiden Leitungen 78, 79 zu einem gegebenen Zeitpunkt den Hochdruckzweig und welche den Niederdruckzweig des Druckfluidkreislaufs bildet.

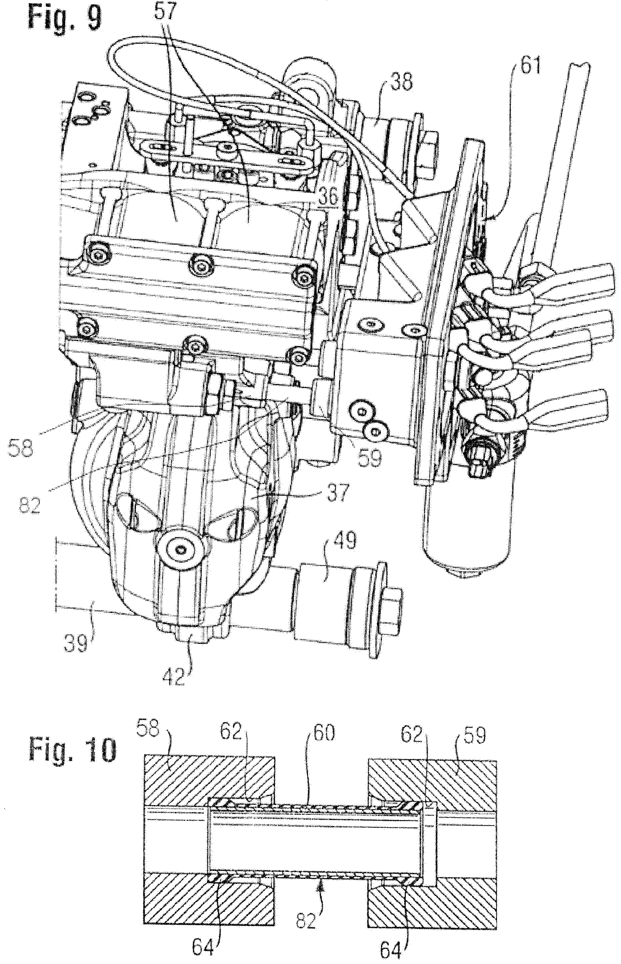

Der Druckfluidkreislauf verliert kontinuierlich Hydrauliköl, z.B. aufgrund von Undichtigkeiten der hydrostatischen Einheiten 23, 33, oder weil es zur Schmierung von Lagern des hydrostatischen Getriebes abgezweigt wird. Außerdem muss in dem Kreislauf zirkulierendes Hydrauliköl kontinuierlich ausgetauscht werden, um eine Überhitzung des Öls zu vermeiden. Eine Speisepumpe, die - über einen nicht dargestellten Ölfilter und Ölkühler - das in dem Druckfluidkreislauf zirkulierende Öl ergänzt, ist mit 80 bezeichnet und kann außerhalb oder innerhalb des Außengehäuses 40 angeordnet sein. Eine Speiseleistung 81 erstreckt sich von einem Hochdruckanschluss der Speisepumpe 80 durch die Wand des Außengehäuses 40 hindurch und über ein mit Bezug auf Fig. 9 und 10 später noch genauer erläutertes nachgiebiges Zwischenstück 82 zu zwei Druckbegrenzungsventilen 83, die ihrerseits mit einer der Druckfluidleitungen 78,79 verbunden sind. Unter dem Druck des von der Speisepumpe 80 gelieferten Öls öffnet sich jeweils dasjenige der Druckbegrenzungsventile 83, das mit der momentan den Niederdruckzweig bildenden Druckfluidleitung verbunden ist. Auf diese Weise werden Ölverluste des Druckfluidkreislaufs kontinuierlich ausgeglichen.

Von der Speiseleitung 81 zweigen Steuerleitungen 84, 85 ab, die ebenfalls die Wand des Außengehäuses 40 kreuzen und über ein nachgiebiges Zwischenstück 82 zu den hydrostatischen Einheiten 23, 33 zugeordneten Wegeventilen 86 führen, wobei allerdings in der Fig. 8 nur das der hydrostatischen Einheit 23 zugeordnete dargestellt ist. Das Wegeventil 86 steuert den Zufluss von Hydrauliköl zu den (hier als ein doppelt wirkender Stellzylinder dargestellten) Stellgliedern 57, die die Orientierung des Zylinderblocks 34 der hydrostatischen Einheit 23 und damit ihre Schluckmenge einstellen. In einem hier nicht gezeigten Ausführungsbeispiel sind die Stellzylinder 57 zusätzlich mit einer weiteren Druckölversorgung verbunden, die aus einem weiteren fahrzeugseitigen Hydraulikkreislauf bereit gestellt werden kann. Das ermöglicht, dass kurzfristige Spitzen im Volumenstrombedarf der Stellzylinder 57 nicht über die Speisepumpe 80 abdecken muss.

Ein weiteres Wegeventil 88 ist mit den Druckfluidleitungen 78, 79 verbunden und hydraulisch gesteuert, um jeweils diejenige der Druckfluidleitungen 78, 79, die Niederdruck führt, mit einer Ablaufleitung 89 zu verbinden. Diese führt über eine Drossel, hier beispielhaft dargestellt als ein gedrosseltes Druckbegrenzungsventil 90, zu einem Ölsumpf 91 am Boden des Außengehäuses 40. Anstatt zum Ölsumpf 91 könnte die Ablaufleitung auch unmittelbar zum Ölkühler und über diesen zu einem Sauganschluss der Speisepumpe 80 führen, so dass das Öl sofort wieder in den Druckfluidkreislauf eingespeist wird.

Die Temperatur dieses Öls - die mit der Temperatur der hydrostatischen Einheiten 23, 33 gleichgesetzt werden kann - wird von einem an der Ablaufleitung 89 angeordneten Temperatursensor 92 erfasst. Der Temperatursensor ist verbunden mit einem Regelkreis 93, der anhand der erfassten Temperatur den Grenzdruck eines Proportionalventils 94 regelt, das in einem direkt zum Ölsumpf 91 führenden Zweig 95 der Speiseleitung 81 angeordnet ist und über das derjenige Anteil des von der Speisepumpe 80 geförderten Öls, der nicht von dem hydrostatischen Getriebe abgenommen wird, zum Ölsumpf 91 abfließt.

Wenn die von dem Sensor 92 erfasste Öltemperatur niedrig ist und infolgedessen ein langsamer Austausch des zwischen den hydrostatischen Einheiten 23, 33 zirkulierenden Öls genügt, ist der Grenzdruck des Proportionalventils 94 niedrig. Es fließt daher ein großer Teil des von der Speisepumpe 80 geförderten Öls über das Proportionalventil 94 ab. Aufgrund des am Proportionalventil 94 eingestellten niedrigen Grenzdrucks ist die anfallende Verlustleistung gering.

Wenn die Temperatur des Ölkreislaufs hoch ist, stellt der Regelkreis 93 am Proportionalventil 94 einen hohen Druck ein. Infolgedessen wird mehr Öl in den Ölkreislauf hineingedrückt und die Öltemperatur wird wirksam begrenzt.

Der Temperatursensor 92 könnte auch an einer der Druckfluidleitungen 78, 79 angeordnet sein, um die Temperatur des hydrostatischen Getriebes zu erfassen. Alternativ oder ergänzend wäre auch eine Regelung des Proportionalventils 94 anhand der Leistung des hydrostatischen Getriebes möglich, indem z.B. Drucksensoren an den Leitungen 78, 79 angeordnet sind, um die Druckdifferenz zwischen den Leitungen zu erfassen. Um anhand dieser Druckdifferenz die Leistung des hydrostatischen Getriebes zu berechnen, empfängt der Regelkreis 93 von einer übergeordneten Regelung Drehzahl und Schluckmenge einer der beiden hydrostatischen Einheiten 23, 33 (wobei die Schluckmenge durch die Position der der Einheit zugeordneten Stellglieder 57 repräsentiert sein kann). Die Drehzahl der jeweils als Pumpe arbeitenden hydrostatischen Einheit braucht hierfür nicht eigens gemessen zu werden; sie kann in Kenntnis des jeweils an den Kupplungen 19, 29 eingestellten Fahrbereichs und der dadurch implizierten Übersetzungsverhältnissen zwischen Antriebswelle 1 und hydrostatischer Einheit 23 oder 33 aus der üblicherweise bekannten Drehzahl der Antriebswelle 1 berechnet werden.

Fig. 9 veranschaulicht den Durchgang der Speiseleitung 81 und der Steuerleitungen 84, 85 durch das Gehäuse 40 anhand einer perspektivischen Ansicht eines Teils des hydrostatischen Getriebes, des Durchführungsrahmens 61, der das Fenster des Gehäusemoduls 66 dicht ausfüllt, sowie von sich zwischen dem hydrostatischen Getriebe und dem Durchführungsrahmen 61 erstreckenden Teilen der Leitungen 81, 84, 85. Diese Leitungen 81, 84, 85 umfassen jeweils einen am Trägerrahmen 36 festen Abschnitt 58, einen am Durchführungsrahmen 61 festen Abschnitt 59 und das bereits erwähnte nachgiebige Zwischenstück 82, dessen Aufbau in Fig. 10 in einem Längsschnitt gezeigt ist: Die Leitungsabschnitte 58 und 59 sind an ihren Enden zu einer Muffe 62 aufgeweitet, in die ein starrwandiges Rohrstück 60 mit Spiel in axialer und radialer Richtung eingreift. Das Rohrstück 60 ist auf seiner ganzen Länge mit einem Elastomerüberzug 63 versehen, der an den Enden jeweils zu einem an der Innenfläche der Muffe 62 dicht anliegenden Wulst 64 verdickt ist. Die axiale Ausdehnung des Bereichs, in dem der Wulst 64 die Muffe 62 berührt, ist erheblich kleiner als der Durchmesser der Muffe 62, so dass das Rohrstück 60 sich nicht nur in Längsrichtung gegen die Muffen 62 bewegen, sondern auch in beiden Muffen 62 um kleine Winkel schwenken kann. Die Muffen 62 und die darin eingreifenden Enden des Rohrstücks 60 bilden so jeweils eine teleskopische und schwenkbare Verbindung. Die Leitungsabschnitte 59, 58 sind daher in alle Raumrichtungen gegeneinander beweglich, so dass Verlagerungen des gegenüber dem Gehäuse 40 elastisch gelagerten Trägerrahmens 36 ermöglicht werden. Durch den Elastomerüberzug 63 wird das Zwischenstück 82 gegenüber den Leitungsabschnitten 58 und 59 hydraulisch abgedichtet und zudem wird abgesichert, dass keine Schwingungen der Hydrostateinheiten 23, 33 auf das Außengehäuse 40 übertragen werden.

### Bezugszeichen

- 1: Antriebswelle
- 2: Motor
- 3: Zapfwellenanschluss
- 4: Sonnenrad
- 5: Planetenrad
- 6: Planetenträger
- 7: Ausgangswelle
- 8: Planetenrad
- 9: Sonnenrad
- 10: Zahnrad
- 11: Hohlwelle
- 12: Hohlwelle
- 13: Hohlrad
- 14: Zahnrad
- 15: Vorgelegewelle
- 16: Bogenzahnkupplung
- 17: Planetengetriebe
- 18: Hydrostatwelle
- 19: Kupplung
- 20: Zahnkranz
- 21: Zahnrad
- 22: Zahnrad
- 23: hydrostatische Einheit
- 24: Zahnrad
- 25: Vorgelegewelle
- 26: Bogenzahnkupplung
- 27: Umkehrrad
- 28: Hydrostatwelle
- 29: Kupplung
- 30: Zahnrad
- 31: Zahnrad
32
- 33: hydrostatische Einheit
- 34: Zylinderblock
35
- 36: Trägerrahmen
- 37: Gehäuse
- 38: Stift
- 39: Stift
- 40: Außengehäuse
- 41: Spitze der Welle 18 bzw. 28
- 42: Schelle
- 43: Bohrung
- 44: Schraubsechskant
- 45: Flansch
- 46: Gewindeabschnitt
- 47: Elastomerhülse
- 48: Abschnitt
- 49: Ultrabuchse
- 50: Elastomerschicht
- 51: äußere Hülse
- 52: innere Hülse
- 53: Schulter
- 54: Platte
- 55: Deckel
- 56: Elastomerscheibe
- 57: Stellglied
- 58: Leitungsabschnitt
- 59: Leitungsabschnitt
- 60: Rohrstück
- 61: Durchführungsrahmen
- 62: Muffe
- 63: Elastomerüberzug
- 64.: Wulst
- 65: Gehäusemodul
- 66: Gehäusemodul
- 67: Gehäusemodul
- 68: Flansch
- 69: Aussparung
- 70: Hydraulikzylinder
- 71: Hebel
- 72: Hydraulikfluidleitung
- 73: Deckel
- 74: Bohrung
- 75: Schraube
- 78: Druckfluidleitung
- 79: Druckfluidleitung
- 80: Speisepumpe
- 81: Speiseleitung
- 82: nachgiebige Verbindung
- 83: Druckbegrenzungsventilen
- 84: Steuerleitung
- 85: Steuerleitung
- 86: Wegeventil
87
- 88: Wegeventil
- 89: Ablaufleitung
- 90: Druckbegrenzungsventil
- 91: Ölsumpf
- 92: Temperatursensor
- 93: Regelkreis
- 94: Proportionalventil
- 95: Zweig

## Patentansprüche

1. Getriebeaggregat mit einem hydrostatischen Getriebe, das wenigstens zwei in einem Druckfluidkreislauf (23 ,33, 78 , 79) verbundene hydrostatische Einheiten (23, 33) umfasst, einem Druckfluidreservoir (91), einer Speisepumpe (80) zum Fördern von Druckfluid aus dem Druckfluidreservoir (91) in den Druckfluidkreislauf (23 , 33 , 78, 79) und einem Druckbegrenzungsventil (94), das einen Auslassanschluss der Speisepumpe (80) mit dem Druckfluidreservoir (91) verbindet, wobei ein Grenzdruck, bei dessen Überschreitung das Druckbegrenzungsventil (94) öffnet, verstellbar ist, **dadurch gekennzeichnet, dass** ein Regelkreis (93) mit dem Druckbegrenzungsventil (94) und mit einem Temperatursensor (92) verbunden ist, um den Druck am Ausgang der Speisepumpe (80) anhand einer Betriebstemperatur des hydrostatischen Getriebes zu regeln.

2. Getriebeaggregat nach Anspruch1, **dadurch gekennzeichnet, dass** eine de∼ hydrostatischen Einheiten (23, 33) als Pumpe und die andere als Motor arbeitet, und dass ein gemeinsamer Primärmotor mit der Speisepumpe (80) und der als Pumpe arbeitenden hydrostatischen Einheit (23, 33) mechanisch verbunden ist.

3. Getriebeaggregat nach Anspruch 1 oder 2, **dadurch gekennzeichnet, dass** das verstellbare Druckbegrenzungsventil (94) als Proportionsventil ausgebildet ist.

4. Getriebeaggregat nach einem der vorhergehenden Ansprüche, **dadurch gekennzeichnet, dass** der Temperatursensor (92) an einer von dem hydrostatischen Getriebe zum Druckfluidreservoir (91) führen den Ablaufleitung (89) angeordnet ist.

5. Getriebeaggregat nach einem der Ansprüche 1 bis 3, **dadurch gekennzeichnet, dass** ein Regelkreis (93) eingerichtet ist, den Druck am Ausgang der Speisepumpe (80) anhand des Durchsatzes der hydrostatischen Einheiten(23 , 33) und/oder wenigstens eines in dem Druckfluidkreislauf (23, 22, 78, 79) gemessenen Drucks zu regeln.

6. Getriebeaggregat nach einem der vorhergehenden Ansprüche, **dadurch gekennzeichnet, dass** wenigstens eine Kupplung (19, 29) hydraulisch mittels des von der Speisepumpe (80) geförderten Druckfluids betätigbar ist.

7. Getriebeaggregat nach einem der vorhergehenden Ansprüche, **dadurch gekennzeichnet, dass** die Schluckmenge wenigstens einer der hydrostatischen Einheiten (23, 33) mittels eines hydraulischen Stellglieds (57) verstellbar ist, das durch von der Speisepumpe (80) gefördertes Druckfluid antreibbar ist.

8. Getriebeaggregat nach einem der vorhergehenden Ansprüche, **dadurch gekennzeichnet, dass** es ferner ein mechanisches Verzweigungsgetriebe (17, 15, 25) umfasst.

9. Getriebeaggregat nach einem der vorhergehenden Ansprüche, **dadurch gekennzeichnet, dass** das hydrostatische Getriebe (23, 33) mit der Speisepumpe (80) durch eine Druckfluidleitung (81) verbunden ist, die zwischen einem getriebeseitigen Leitungsabschnitt (77) und einem pumpenseitigen Leitungsabschnitt (59) wenigstens eine teleskopische und/oder schwenkbare Verbindung aufweist.

10. Getriebeaggregat nach Anspruch 9 **dadurch gekennzeichnet, dass** die Druckfluidleitung (81) einen Ausgleichsabschnitt (60) umfasst, der mit dem getriebeseitigen Leitungsabschnitt (77) und dem pumpenseitigen Leitungsabschnitt (59) über eine teleskopische und/oder schwenkbare Verbindung verbunden ist.

11. Getriebeaggregat nach Anspruch 9 oder 10, **dadurch gekennzeichnet, dass** die Verbindung einen äußeren Rohrabschnitt (59, 77), einen mit radialem Spiel in den äußeren Rohrabschnitt auf einer Länge eingreifenden inneren Rohrabschnitt (60) und eine das radiale Spiel auf einem Bruchteil der Länge ausfüllende Dichtung (64) umfasst.

12. Getriebeaggregat nach einem der Ansprüche 9 bis 11, **dadurch gekennzeichnet, dass** das hydrostatische Getriebe (23, 33) in einem Gehäuse (40) entnehmbar montiert ist und dass der pumpenseitige Leitungsabschnitt (59) am Gehäuse (40) fest ist.

13. Getriebeaggregat nach Anspruch 12 **dadurch gekennzeichnet, dass** das Gehäuse (40) das Druckfluidreservoir (91) bildet.

14. Getriebeaggregat nach Anspruch 12 oder 13, **dadurch gekennzeichnet, dass** das hydrostatische Getriebe (23, 33) in dem Gehäuse (40) durch Stifte (38, 39) gehalten ist, die durch eine Wand des Gehäuses (40) hindurch in einen Träger (36) des hydrostatischen Getriebes (23, 33) eingreifen und aus der Wand (40) und dem m Träger (36) herausziehbar sind.

## Claims

1. A transmission assembly comprising a hydrostatic transmission which includes at least two hydrostatic units (23, 33) connected in a pressure fluid circuit (23, 33, 78, 79), a pressure fluid reservoir (91), a feed pump (80) for conveying pressure fluid from the pressure fluid reservoir (91) into the pressure fluid circuit (23, 33, 78, 79) and a pressure limiting valve (94) connecting an outlet connection of the feed pump (80) to the pressure fluid reservoir (91), wherein a limit pressure can be set, the pressure limiting valve (94) opening when the limit pressure is exceeded, **characterised in that** a closed-loop control circuit (93) is connected to the pressure limiting valve (94) and to a temperature sensor (92) to control the pressure at the outlet of the feed pump (80) on the basis of an operating temperature of the hydrostatic transmission.

2. A transmission assembly according to claim 1 **characterised in that** one of the hydrostatic units (23, 33) operates as a pump and the other as a motor and that a common primary motor is mechanically connected to the feed pump (80) and to the hydrostatic unit (23, 33) operating as the pump.

3. A transmission assembly according to claim 1 or claim 2 **characterised in that** the adjustable pressure limiting valve (94) is in the form of a proportional valve.

4. A transmission assembly according to one of the preceding claims **characterised in that** the temperature sensor (92) is arranged at a discharge line (89) leading from the hydrostatic transmission to the pressure fluid reservoir (91).

5. A transmission assembly according to one of claims 1 to 3 **characterised in that** a closed-loop control circuit (93) is adapted to control the pressure at the outlet of the feed pump (80) on the basis of the throughput of the hydrostatic units (23, 33) and/or at least one pressure measured in the pressure fluid circuit (23, 33, 78, 79).

6. A transmission assembly according to one of the preceding claims **characterised in that** at least one coupling (19, 29) is actuable hydraulically by means of the pressure fluid delivered by the feed pump (80).

7. A transmission assembly according to one of the preceding claims **characterised in that** the intake capacity of at least one of the hydrostatic units (23, 33) is adjustable by means of a hydraulic adjusting member (57) drivable by pressure fluid delivered by the feed pump (80).

8. A transmission assembly according to one of the preceding claims **characterised in that** it further includes a mechanical distribution gear (17, 15, 25).

9. A transmission assembly according to one of the preceding claims **characterised in that** the hydrostatic transmission (23, 33) is connected to the feed pump (80) by a pressure fluid line (81) which between a transmission-side line portion (77) and a pump-side line portion (59) has at least one telescopic and/or pivotable connection.

10. A transmission assembly according to claim 9 **characterised in that** the pressure fluid line (81) includes a compensation portion (60) connected to the transmission-side line portion (77) and the pump-side line portion (59) by way of a telescopic and/or pivotable connection.

11. A transmission assembly according to claim 9 or claim 10 **characterised in that** the connection includes an outer tube portion (59, 77), an inner tube portion (60) engaging with radial play into the outer tube portion over a length and a seal (64) filling the radial play over a fraction of the length.

12. A transmission assembly according to one of claims 9 to 11 **characterised in that** the hydrostatic transmission (23, 33) is removably mounted in a housing (40) and that the pump-side line portion (59) is fixed on the housing (40).

13. A transmission assembly according to claim 12 **characterised in that** the housing (40) forms a pressure fluid reservoir (91).

14. A transmission assembly according to claim 12 or claim 13 **characterised in that** the hydrostatic transmission (23, 33) is held in the housing (40) by pins (38, 39) which engage through a wall of the housing (40) into a carrier (36) of the hydrostatic transmission (23, 33) and can be withdrawn from the wall (40) and the carrier (36).

## Revendications

1. Organe de transmission comprenant une boîte de vitesses hydrostatique qui comporte au moins deux unités hydrostatiques (23, 33) reliées dans un circuit de fluide de pression (23, 33, 78, 79), un réservoir de fluide de pression (91), une pompe d'alimentation (80) pour refouler du fluide de pression du réservoir de fluide de pression (91) au circuit de fluide de pression (23, 33, 78, 79) et une valve de limitation de pression (94) qui relie un raccord de sortie de la pompe d'alimentation (80) au réservoir de fluide de pression (91), la pression limite, lors du dépassement de laquelle la valve de limitation de pression (94) s'ouvre, étant réglable, **caractérisé en ce qu'**une boucle de régulation (93) est reliée à la valve de limitation de pression (94) et à un capteur de température (92) pour réguler la pression à la sortie de la pompe d'alimentation (80) sur la base de la température de fonctionnement de la boîte de vitesses hydrostatique.

2. Organe de transmission selon la revendication 1, **caractérisé en ce qu'**une des unités hydrostatiques (23, 33) fonctionne comme pompe et l'autre comme moteur, et **en ce qu'**un moteur primaire commun est relié mécaniquement à la pompe d'alimentation (80) et à l'unité hydrostatique (23, 33) fonctionnant comme pompe.

3. Organe de transmission selon la revendication 1 ou 2, **caractérisé en ce que** la valve réglable de limitation de pression (94) est conformée en valve proportionnelle.

4. Organe de transmission selon une des revendications précédentes, **caractérisé en ce que** le capteur de température (92) est disposé sur une conduite de sortie (89) menant de la boîte de vitesses hydrostatique au réservoir de fluide de pression (91) .

5. Organe de transmission selon une des revendications 1 à 3, **caractérisé en ce qu'**une boucle de régulation (93) est agencée pour réguler la pression à la sortie de la pompe d'alimentation (80) sur la base du débit des unités hydrostatiques (23, 33) et/ou au moins d'une pression mesurée dans le circuit de fluide de pression (23, 22, 78, 79).

6. Organe de transmission selon une des revendications précédentes, **caractérisé en ce qu'**au moins un accouplement (19, 29) est actionnable hydrauliquement au moyen du fluide de pression refoulé par la pompe d'alimentation (80).

7. Organe de transmission selon une des revendications précédentes, **caractérisé en ce que** la quantité absorbée par au moins une des unités hydrostatiques (23, 33) est réglable au moyen d'un actionneur hydraulique (57) qui est actionnable par le fluide de pression refoulé par la pompe d'alimentation (80).

8. Organe de transmission selon une des revendications précédentes, **caractérisé en ce qu'**il comprend également une transmission mécanique à répartition de puissance (17, 15, 25).

9. Organe de transmission selon une des revendications précédentes, **caractérisé en ce que** la boîte de vitesses hydrostatique (23, 33) est reliée à la pompe d'alimentation (80) par l'intermédiaire d'une conduite de fluide de pression (81) qui comporte, entre une portion de conduite côté transmission (77) et une portion de conduite côté pompe (59), au moins une liaison télescopique et/ou pivotante.

10. Organe de transmission selon la revendication 9, **caractérisé en ce que** la conduite de fluide de pression (81) comporte une portion de compensation (60) qui est reliée à la portion de conduite côté transmission (77) et à la portion de conduite côté pompe (59) par l'intermédiaire d'une liaison télescopique et/ou pivotante.

11. Organe de transmission selon la revendication 9 ou 10, **caractérisé en ce que** la liaison comprend une portion tubulaire extérieure (59, 77), une portion tubulaire intérieure (60) pénétrant sur une longueur dans la portion tubulaire extérieure avec un jeu radial, et un joint (64) comblant le jeu radial sur une fraction de la longueur.

12. Organe de transmission selon une des revendications 9 à 11, **caractérisé en ce que** la boîte de vitesses hydrostatique (23, 33) est montée amovible dans un carter (40) et **en ce que** la portion de conduite côté pompe (59) est fixée au boîtier (40).

13. Organe de transmission selon la revendication 12, **caractérisé en ce que** le carter (40) forme le réservoir de fluide de pression (91).

14. Organe de transmission selon la revendication 12 ou 13, **caractérisé en ce que** la boîte de vitesses hydrostatique (23, 33) est maintenue dans le carter (40) par des broches (38, 39) qui pénètrent dans un support (36) de la boîte de vitesses hydrostatique (23, 33) à travers une paroi du carter (40) et peuvent être extraites de la paroi (40) et du support (36).
